# FASCICULE DE BREVET EUROPEEN

(11) **EP 1 122 404 B1**
(45) Date de publication et mention de la délivrance du brevet: **22.09.2004**
(21) Numéro de dépôt: 01490001.3
(22) Date de dépôt: 11.01.2001
(51) Int. Cl.: E06B 9/80, E05F 15/00, H02H 7/085

(54) **Procédé de contrôle du déplacement d'un élément de fermeture qui s'enroule autour d'un tambour motorisé et dispositif pour la mise en oeuvre du procédé.**
Antriebssteuerung für eine Verschlussvorrichtung, die auf einer motorgetriebenen Welle aufrollbar ist, sowie Vorrichtung zur Durchführung dieser Steuerung
Movement control for a closing device which rolls on a motor driven roller, and device for implementing such a control

(30) Priorité: 11.01.2000 FR 0000261
(43) Date de publication de la demande: 08.08.2001
(73) Titulaire: Jouvence, sarl, 62136 Lestrem (FR)
(72) Inventeur: Stempniakowski Tonny,, 62840 Laventie (FR)
(74) Mandataire: Hennion, Jean-Claude

(56) Documents cités:
- EP-A- 0 940 554
- US-A- 5 834 658

## Description

L'invention se rapporte à un procédé de contrôle du déplacement d'un élément de fermeture qui s'enroule autour d'un tambour motorisé.

Elle se rapporte également aux moyens pour la mise en oeuvre du procédé.

Par élément de fermeture, on comprendra tant un volet roulant qu'un flanc de matière destiné à intercepter tout ou partie du rayonnement solaire et donc, par exemple, destiné à occulter une ouverture.

Il est de plus en plus courant d'équiper les ouvertures des bâtiments, telles les portes ou les fenêtres de volets roulants s'opposant à l'intrusion de tiers, mal intentionnés.

Classiquement, un élément de fermeture du type volet roulant comprend donc un tambour sur lequel s'enroule une paroi guidée en translation dans des guides.

Cette paroi est par exemple constituée par assemblage de lames rigides reliées deux à deux par des moyens d'articulation permettant à cette paroi de s'enrouler autour d'un tambour.

Pour la manoeuvre de ces volets roulants, on a souvent fait appel à un moyen mécanique d'entraînement de la rotation du tambour, tel une sangle ou une manivelle.

Depuis quelques temps, sont apparus des moteurs électriques suffisamment compacts et d'un coût réduit permettant aux particuliers d'équiper leurs volets roulants actionnés manuellement ou de s'équiper de volets motorisés.

Classiquement, le déplacement de ces volets roulants se fait entre deux positions extrêmes, dites position haute et position basse.

Il suffit d'agir sur un interrupteur commandant l'alimentation du moteur dans un sens ou dans l'autre et donc de commander le déplacement du volet .

Par simple retour en position médiane ou intermédiaire de l'interrupteur, on peut arrêter le déplacement du volet.

Ainsi, lorsque l'interrupteur est basculé précocement, le volet s'arrête à la hauteur souhaitée.

Au delà de ces deux positions extrêmes, l'alimentation du moteur d'entraînement doit être interrompue sous réserve de provoquer un échauffement puis, à long terme, une destruction dudit moteur.

Sur les volets roulants motorisés, il est donc prévu un arrêt automatique de ces moteurs lorsque le volet a atteint l'une ou l'autre des positions haute ou basse précitées.

Ces positions haute ou basse peuvent être déterminées par des contacts mécaniques qui, en réponse à une force exercée par le volet, provoquent l'interruption de l'alimentation électrique du moteur, par exemple, par ouverture d'un circuit électrique, tel que le ferait un interrupteur.

Un tel système nécessite l'utilisation de contacts reliés par une liaison câblée au dispositif de commande du déplacement de l'élément de fermeture.

On peut craindre que le système s'altère au cours du temps, notamment par oxydation des contacts.

La présence de cette liaison câblée impose des contraintes lors de la pose.

Il est connu (FR-A-2.743.602) de coupler mécaniquement la rotation du moteur avec un dispositif produisant à intervalles réguliers des impulsions indiquant la position angulaire du tambour ou du moteur et le nombre de tours effectués par celui-ci.

Chaque tour de tambour produit un nombre prédéterminé d'impulsions; il est alors possible de connaître le déplacement du volet.

On note cependant que le déplacement du volet, lorsqu'il est complètement enroulé sur le tambour, est différent de celui produit au dernier tour. Un autre document US-A-5834658 aussi montre un procédé similaire.

A l'aide d'une mémoire et d'une commande de mémorisation, il est possible de définir les points hauts et bas du volet en mémorisant la première impulsion et la dernière impulsion.

A l'aide de ces deux valeurs et d'un seul compteur, il est possible de connaître à tous instants la position exacte du volet et par conséquent le stopper lorsque la valeur du compteur est proche ou identique à l'une des valeurs en mémoire.

Cette solution est intéressante car il n'y pas théoriquement de dérive possible du système mais cela nécessite des moyens pour la production de ces impulsions et donc un espace suffisant pour les loger.

Par ailleurs, il n'est pas rare que les impulsions soient produites par des photoémetteurs et reçues par des photorécepteurs qui, en se salissant ne fonctionnent plus convenablement.

Un fonctionnement, tel que précité, nécessite, lors de la mise en route du système de procéder à une procédure d'installation, notamment une étape pour valider le point haut et le point bas.

Ces opérations bien que relativement simples apparaissent constituer une difficulté pour un particulier souhaitant poser lui-même ce type de volet.

On connaît donc un autre moyen qui consiste à surveiller la variation brutale du couple du moteur (DE-A-4.440.449) par examen du déphasage entre une tension et un courant.

Ainsi lorsque le système enregistre un déphasage supérieur à une valeur de consigne, il interprète le déphasage comme résultant d'une arrivée en fin de course et stoppe l'alimentation du moteur et qui, en outre, est mal perçu par le client.

Cette solution permet de s'affranchir totalement des positions haute et basse mais cela provoque à chaque fois un surcouple qui pourrait être préjudiciable à la longévité du moteur.

L'invention se propose d'apporter une solution aux problèmes évoqués plus haut.

A cet effet, l'invention a pour objet un procédé de contrôle du déplacement d'un élément de fermeture se déplaçant entre deux positions extrêmes dites position haute et position basse, lequel élément de fermeture s'enroule autour d'un tambour entraîné en rotation par un moteur commandé par une unité de commande comprenant notamment des moyens pour détecter un surcouple par surveillance du déphasage courant/tension du moteur, ce procédé étant caractérisé en ce que:
- à chacun des deux sens de déplacement du volet, on affecte un compteur l'un dit de descente et l'autre de montée,
- on détermine, à l'aide d'une horloge, au moins indirectement, d'une part, le temps nécessaire pour passer de la position haute à la position basse, appelé temps de descente, et, d'autre part, le temps nécessaire pour passer de la position basse à la position haute, appelé temps de montée,
- on mémorise au moins indirectement le temps de descente dans une mémoire de descente et le temps de montée dans une mémoire de montée,
- à chaque déplacement de l'élément de fermeture et selon le sens de déplacement, on incrémente le compteur correspondant et on le compare à la mémoire associée,
- au moins à chaque arrêt du moteur, on calcule mathématiquement, par une relation de trois, la valeur qui devrait figurer dans l'autre compteur pour une position identique de l'élément de fermeture,
- lors du déplacement suivant, selon le sens du déplacement, on incrémente le compteur correspondant, et
- on arrête le déplacement lorsque le compteur atteint une valeur prédéterminée au plus égale à celle mémorisée dans la mémoire associée.

Elle a également pour objet le dispositif de mise en oeuvre.

L'invention sera bien comprise à l'aide de la description ci-après faite, à titre d'exemple non limitatif, en regard du dessin ci-annexé qui représente schématiquement :

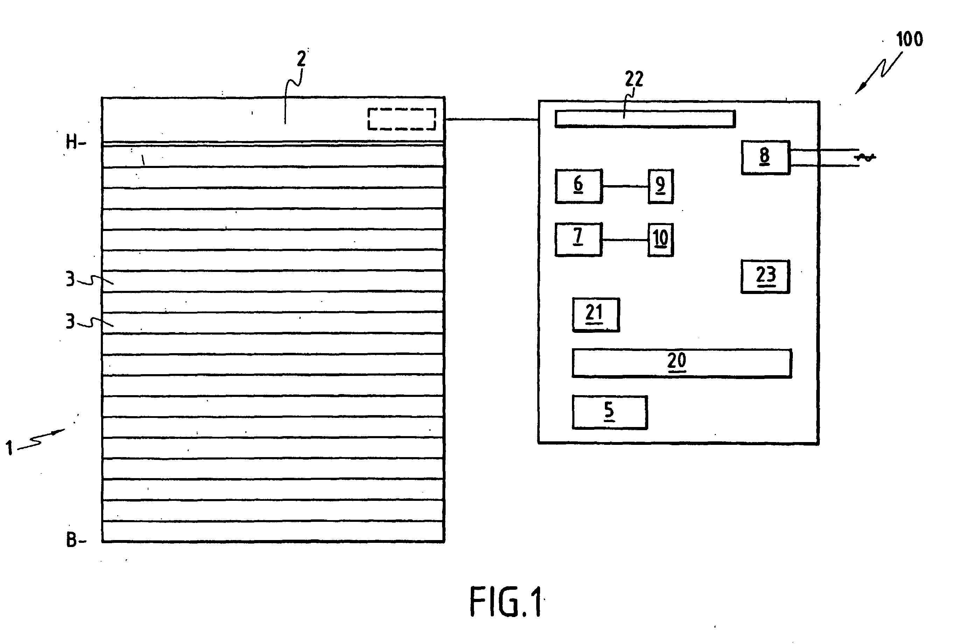

- figure 1 : une installation de contrôle du déplacement d'un élément de fermeture,
- figure 2 : le principe de fonctionnement.

En se reportant au dessin, on voit un élément 1 de fermeture, du type volet roulant, comprenant donc un tambour sur lequel s'enroule une paroi guidée en translation dans des guides, lequel tambour est entraîné en rotation par un moteur 2 agissant sous le contrôle d'une unité de commande.

Cette paroi est par exemple constituée par assemblage de lames 3 rigides reliées deux à deux par des moyens d'articulation permettant à cette paroi de s'enrouler autour d'un tambour.

Pour le déplacement du volet, on fait donc appel à un procédé de contrôle.

L'élément de fermeture se déplace entre deux positions extrêmes, dites position haute H et position basse B.

L'unité 100 de commande comprend notamment des moyens 5 pour détecter un surcouple par surveillance du déphasage courant/tension du moteur.

Cette unité de commande pourrait être pilotée par une télécommande reliée par une liaison filaire mais, de préférence, elle est pilotée par une transmission sans fil, telle une transmission hertzienne ou optique.

Pour le contrôle du déplacement du volet :
- à chacun des deux sens de déplacement du volet, on affecte un compteur l'un dit de descente 6 et l'autre de montée 7,
- on détermine, à l'aide d'une horloge 8, au moins indirectement, d'une part, le temps nécessaire pour passer de la position haute à la position basse, appelé temps de descente, et, d'autre part, le temps nécessaire pour passer de la position basse à la position haute, appelé temps de montée,
- on mémorise, au moins indirectement, le temps de descente dans une mémoire 9 de descente et le temps de montée dans une mémoire 10 de montée,
- à chaque déplacement de l'élément de fermeture et selon le sens de déplacement, on incrémente le compteur 6/7 correspondant,
- au moins à chaque arrêt, on calcule mathématiquement, par une relation de trois, la valeur qui devrait figurer dans l'autre compteur pour une position de l'élément de fermeture identique,
- lors du déplacement suivant et selon le sens de ce déplacement, on incrémente le compteur correspondant et
- on arrête le déplacement lorsque le compteur atteint une valeur prédéterminée au plus égale à celle mémorisée.

Avantageusement, à chaque démarrage du moteur, on applique un facteur de correction pour tenir compte de l'inertie .

On applique un facteur de correction d'inertie pour le sens de montée et un facteur de correction différent pour le sens de descente.

Selon l'invention, pour déterminer les temps de montée et/ou de descente, par émission d'une séquence de commande logique :
- on amène l'élément de fermeture vers l'une dite première des butées de manière à détecter un premier surcouple, on initialise alors la procédure de détermination des temps de montée et descente ,
- on mesure le temps nécessaire pour déplacer l'élément de fermeture vers l'autre butée dite seconde et détecter un deuxième surcouple de sorte à déterminer l'un des deux temps de montée et descente,
- on déplace à nouveau l'élément de fermeture le volet en sens contraire vers la butée première jusqu'à détection d'un troisième surcouple de sorte à déterminer l'autre des deux temps de montée et descente.

Pour des raisons techniques, le temps de montée et descente est une valeur qui correspond au nombre d'impulsions produites par une horloge lors de la montée ou la descente.

Avantageusement, la valeur mémorisée des temps de montée et descente est égale au nombre d'impulsions mesurées, minimisées d'une quantité prédéterminée de manière qu'en principe, le volet n'arrive jamais totalement en butée et en état de compression.

La fréquence des impulsions est constante et ne dépend pas du nombre de tours de l'arbre ou du tambour portant le volet.

Avantageusement, on utilise la fréquence d'oscillations de l'alimentation secteur comme horloge de référence pour calculer les temps de montée et descente.

Ainsi, avec ce procédé, il n'est plus nécessaire de faire appel à un moyen directement couplé par une liaison mécanique au déplacement de l'élément de fermeture.

On s'affranchit ainsi des problèmes mécaniques.

L'utilisation de la fréquence du signal sinusoïdal de l'alimentation permet de contrôler l'élément de fermeture avec suffisamment de précision, la sécurité de fin de course étant toujours contrôlée par le moyen de détection du surcouple.

Il peut se produire une dérive mais qui n'a pas de conséquence sur le fonctionnement, sauf à repositionner le compteur haut et bas en fonction des points hauts et bas.

En effet, lorsque cette détection de surcouple se produit avant que le compteur atteigne la valeur mémorisée, cela signifie que la dérive est trop importante ou qu'il y a un obstacle prématuré.

Ce procédé de contrôle du déplacement du volet préserve donc la fonction d'arrêt sur obstacle prématuré qui est assurée par les moyens 5 de détection de surcouple.

Lorsqu'un surcouple est détecté alors que le compteur n'a pas atteint l'une des valeurs mémorisées, le compteur se voit affecter la valeur maximale mémorisée.

Le compteur opposé la valeur correspondante qui lui aurait été affecté selon le mode de calcul du type règle de trois de sorte que le déplacement du volet ne peut se faire qu'en sens opposé du sens suivant lequel le blocage s'est produit.

Si l'arrêt est lié à la dérive, le fait d'affecter au compteur la valeur maximale revient à recaler le système.

Si l'arrêt est dû à un obstacle, à la prochaine mise en service quand le volet s'arrêtera en butée haute ou basse, le système se recalera.

Le dispositif pour la mise en oeuvre du procédé comprend outre l'élément de fermeture tel un volet, le moteur 2 et les moyens 5 pour détecter un surcouple par surveillance du déphasage courant/tension du moteur :
- un compteur 7, dit de montée, auquel est associée une mémoire 10 dite de montée,
- un compteur 6, dit de descente, auquel est associée une mémoire 9 dite de descente,
- une horloge 8,
- des moyens 20 pour déterminer au moins indirectement d'une part le temps nécessaire, pour passer de la position haute à la position basse, appelé temps de descente et, d'autre part, le temps nécessaire, pour passer de la position basse à la position haute, appelé temps de montée,
- un moyen 21 pour, à chaque déplacement de l'élément de fermeture et selon le sens de déplacement, incrémenter le compteur correspondant,
- un moyen 22 pour, au moins à chaque arrêt, calculer mathématiquement, par une relation mathématique telle une règle de trois, la valeur qui devrait figurer dans l'autre compteur pour une position du volet identique.

Le dispositif de mise en oeuvre comprend également un moyen 23 pour appliquer un facteur de correction d'inertie pour le sens de montée et un facteur de correction différent pour le sens de descente.

Plusieurs possibilité sont offertes.

Par exemple, le compteur est déclenché avec un temps de latence ou alors on applique un coefficient correcteur multiplicatif.

On parvient ainsi à piloter un volet sans qu'il soit nécessaire de faire appel à une horloge extérieure et à des contacts.

Cela permet de réduire les coûts de production.

Un autre avantage est lié au fait que, lors de l'initialisation, les compteurs contiennent une valeur minimale supérieure à zéro de sorte que, lors des calculs de règles de tiers, il n'y a pas de risque d'obtenir une valeur négative.

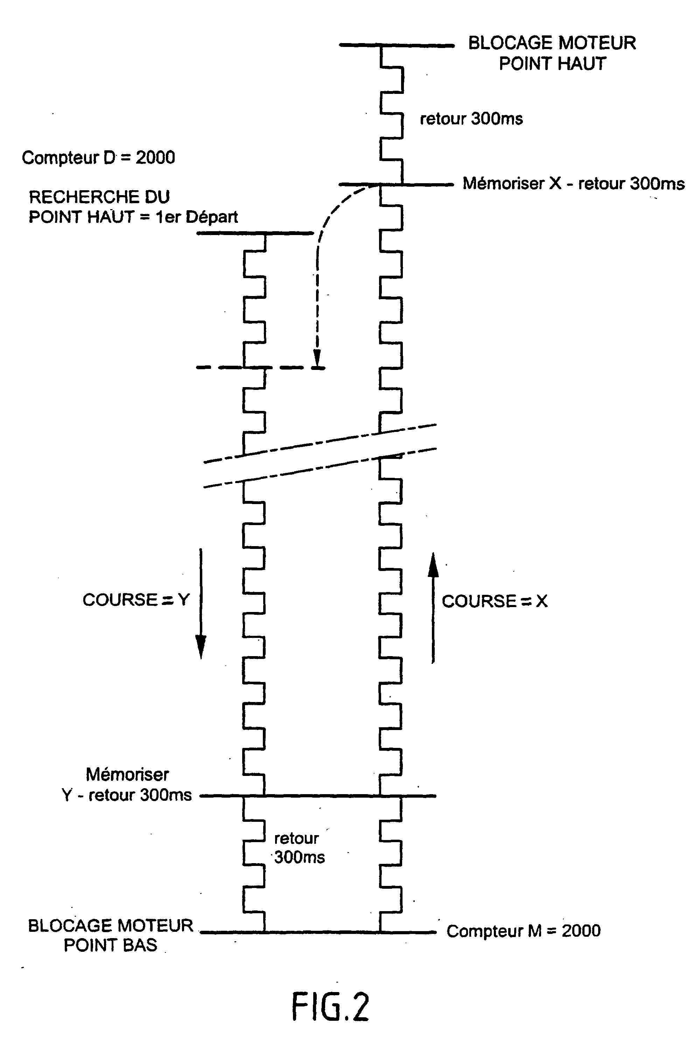

La figure 2 montre le principe de l'installation.

Les compteurs sont mis, par exemple, à une valeur égale à 2000.

Le volet part du haut et recherche le point bas.

Il mémorise une course égale à Y minorée d'une valeur, par exemple, 300 millisecondes, ce qui évitera chaque fois d'arriver en butée.

Il repart en sens inverse pour mémoriser la course X moins 300 millisecondes.

La flèche en pointillé montre la conversion d'un compteur à un autre.

## Revendications

1. Procédé de contrôle du déplacement d'un élément de fermeture se déplaçant entre deux positions extrêmes dites position haute et position basse, lequel élément de fermeture s'enroule autour d'un tambour entraîné en rotation par un moteur commandé par une unité de commande comprenant notamment des moyens pour détecter un surcouple par surveillance du déphasage courant/tension du moteur, ce procédé étant **CARACTERISE en ce que** :
- à chacun des deux sens de déplacement du volet, on affecte un compteur l'un dit de descente (6) et l'autre de montée (7),
- on détermine, à l'aide d'une horloge (8), au moins indirectement, d'une part, le temps nécessaire pour passer de la position haute à la position basse, appelé temps de descente, et, d'autre part, le temps nécessaire pour passer de la position basse à la position haute, appelé temps de montée,
- on mémorise, au moins indirectement, le temps de descente dans une mémoire (9) de descente et le temps de montée dans une mémoire (10) de montée,
- à chaque déplacement de l'élément de fermeture et selon le sens de déplacement, on incrémente le compteur (6,7) correspondant,
- au moins à chaque arrêt, on calcule mathématiquement, par une relation de trois, la valeur qui devrait figurer dans l'autre compteur pour une position de l'élément de fermeture identique,
- lors du déplacement suivant et selon le sens de ce déplacement, on incrémente le compteur correspondant et
- on arrête le déplacement lorsque le compteur atteint une valeur prédéterminée au plus égale à celle mémorisée.

2. Procédé selon la revendication 1 **caractérisé en ce qu'**à chaque démarrage du moteur, on applique un facteur de correction pour tenir compte de l'inertie.

3. Procédé selon la revendication 2 **caractérisé en ce qu'**on applique un facteur de correction d'inertie pour le sens de montée et un facteur de correction différent pour le sens de descente.

4. Procédé selon la revendication 1 **caractérisé en ce que**, pour déterminer les temps de montée et/ou de descente :
- on amène l'élément de fermeture vers l'une dite première des butées de manière à détecter un premier surcouple, on initialise alors la procédure de détermination des temps de montée et descente ,
- on mesure le temps nécessaire pour déplacer l'élément de fermeture vers l'autre butée dite seconde et détecter un deuxième surcouple de sorte à déterminer l'un des deux temps de montée et descente,
- on déplace à nouveau l'élément de fermeture le volet en sens contraire vers la butée première jusqu'à détection d'un troisième surcouple de sorte à déterminer l'autre des deux temps de montée et descente.

5. Procédé selon la revendication 1 ou 4 **caractérisé en ce que** :
- le temps de montée et descente est une valeur qui correspond au nombre d'impulsions produites par une horloge lors de la montée ou la descente et
- la valeur mémorisée des temps de montée et descente est égale au nombre d'impulsions mesurées, minimisées d'une quantité prédéterminée de manière qu'en principe, le volet n'arrive jamais totalement en butée et en état de compression.

6. Procédé selon la revendication 1 **caractérisé en ce qu'**on utilise la fréquence d'oscillations de l'alimentation secteur comme horloge de référence pour calculer les temps de montée et descente.

7. Procédé selon la revendication 1 **caractérisé en ce que**, lorsqu'un surcouple est détecté alors que le compteur n'a pas atteint l'une des valeurs mémorisées, le compteur se voit affecter la valeur maximale mémorisée.

8. Procédé selon la revendication 1 **caractérisé en ce que**, lors de l'initialisation, les compteurs contiennent une valeur minimale supérieure à zéro.

9. Dispositif pour la mise en oeuvre du procédé selon l'une quelconque des revendications 1 à 8 comprenant un élément de fermeture tel un volet, un moteur (2) et des moyens (5) pour détecter un surcouple par surveillance du déphasage courant/tension du moteur, **caractérisés en ce qu'**il comprend :
- - un compteur (7), dit de montée, auquel est associée une mémoire (10) dite de montée,
- un compteur (6), dit de descente, auquel est associée une mémoire (9) dite de descente,
- une horloge (8),
- des moyens (20) pour déterminer au moins indirectement d'une part le temps nécessaire, pour passer de la position haute à la position basse, appelé temps de descente et, d'autre part, le temps nécessaire, pour passer de la position basse à la position haute, appelé temps de montée,
- un moyen (21) pour, à chaque déplacement de l'élément de fermeture et selon le sens de déplacement, incrémenter le compteur correspondant,
- un moyen (22) pour, au moins à chaque arrêt, calculer mathématiquement, par une relation mathématique, la valeur qui devrait figurer dans l'autre compteur pour une position du volet identique.

10. Dispositif selon la revendication 9 **caractérisés en ce qu'**il comprend un moyen (23) pour appliquer un facteur de correction d'inertie pour le sens de montée et un facteur de correction différent pour le sens de descente.

## Patentansprüche

1. Verfahren zur Steuerung der Verschiebung eines Verschlusselements (Rolladens) zwischen zwei Endpositionen, einer so genannten oberen Position und einer so genannten unteren Position, wobei das Verschlusselement sich um eine Walze wickelt, die durch einen Motor in Rotation versetzt wird, der durch eine Steuereinheit gesteuert wird, die insbesondere Einrichtungen zur Feststellung eines überhöhten Motordrehmoments durch Überwachung der Strom/Spannungs-Phasenverschiebung des Motors umfasst, wobei das Verfahren **dadurch gekennzeichnet ist, dass** man
- jeder der beiden Verschiebungsrichtungen des Verschlusselements (Rolladens) ein Zählwerk zuordnet, eines der Absenkungsrichtung (6) und das andere der Anhebungsrichtung (7),
- mit Hilfe eines Zeitgebers (8) mindestens indirekt einerseits die für den Übergang von der oberen Position in die untere Position erforderliche Zeit, die so genannte Absenkungszeit, und andererseits die für den Übergang von der unteren Position in die obere Position erforderliche Zeit, die so genannte Anhebungszeit, bestimmt,
- mindestens indirekt die Absenkungszeit in einem Absenkungsspeicher (9) und die Anhebungszeit in einem Anhebungsspeicher (10) speichert,
- bei jeder Verschiebung des Verschlusselements und entsprechend der Verschiebungsrichtung das entsprechende Zählwerk (6, 7) erhöht,
- mindestens bei jedem Stopp durch Anwendung einer Dreierbeziehung mathematisch den Wert errechnet, der in dem anderen Zählwerk für eine identische Position des Verschlusselements erscheinen muss,
- bei der nachfolgenden Verschiebung und entsprechend der Verschiebungsrichtung das entsprechende Zählwerk erhöht und
- die Verschiebung abstoppt, wenn das Zählwerk einen vorgegebenen Wert erreicht hat, der höchstens gleich dem gespeicherten Wert ist.

2. Verfahren nach Anspruch 1, **dadurch gekennzeichnet, dass** man bei jedem Start des Motors einen Korrekturfaktor eingibt, um der Trägheit Rechnung zu tragen.

3. Verfahren nach Anspruch 2, **dadurch gekennzeichnet, dass** man in der Anhebungsrichtung einen Trägheits-Korrekturfaktor eingibt und in der Absenkungsrichtung einen anderen Korrekturfaktor eingibt.

4. Verfahren nach Anspruch 1, **dadurch gekennzeichnet, dass** man zur Bestimmung der Anhebungszeit und/oder der Absenkungszeit:
- das Verschlusselement bis zu einem ersten der Anschläge verschiebt, um ein erstes überhöhtes Motordrehmoment festzustellen, dann das Verfahren zur Bestimmung der Anhebungszeit und der Absenkungszeit in Gang setzt,
- die für die Verschiebung des Verschlusselements zu dem anderen Anschlag, dem so genannten zweiten Anschlag, und zur Feststellung eines zweiten überhöhten Drehmoments erforderliche Zeit bestimmt, um eine der beiden Anhebungs- und Absenkungszeiten zu bestimmen,
- den Rolladen als Verschlusselement erneut in der Gegenrichtung zu dem ersten Anschlag verschiebt, bis ein drittes überhöhtes Drehmoment festgestellt wird, um auf diese Weise die andere der beiden Anhebungs- und Absenkungszeiten zu bestimmen.

5. Verfahren nach Anspruch 1 oder 4, **dadurch gekennzeichnet, dass**
- die Anhebungszeit und die Absenkungszeit ein Wert ist, der entspricht der Anzahl der Impulse, die durch einen Zeitgeber bei dem Anheben und bei dem Absenken erzeugt werden, und
- der gespeicherte Wert für die Anhebungs- und Absenkungszeiten gleich der Anzahl der gemessenen Impulse ist, vermindert um eine vorgegebene Menge in der Weise, dass im Prinzip der Rolladen niemals vollständig am Anschlag ankommt und in einen unter Druck stehenden Zustand gelangt.

6. Verfahren nach Anspruch 1, **dadurch gekennzeichnet, dass** man die Schwingungsfrequenz des Netzanschlusses als Referenz-Zeitgeber verwendet, um die Anhebungszeit und die Absenkungszeit zu berechnen.

7. Verfahren nach Anspruch 1, **dadurch gekennzeichnet, dass** man dann, wenn ein überhöhtes Drehmoment festgestellt wird, während das Zählwerk nicht einen der gespeicherten Werte erreicht hat, dem Zählwerk den gespeicherten Maximalwert zuordnet.

8. Verfahren nach Anspruch 1, **dadurch gekennzeichnet, dass** am Anfang die Zählwerke einen minimalen Wert oberhalb Null aufweisen.

9. Vorrichtung zur Durchführung des Verfahrens nach einem der Ansprüche 1 bis 8, die ein Verschlusselement, wie z.B. einen Rolladen, einen Motor (2) und Einrichtungen (5) zur Feststellung eines überhöhten Motordrehmoments durch Überwachung der Strom/Spannungs-Phasenverschiebung des Motors umfasst, **dadurch gekennzeichnet, dass** die Vorrichtung umfasst:
- ein so genanntes Anhebungs-Zählwerk (7), dem ein so genannter Anhebungs-Speicher (10) zugeordnet ist,
- ein so genanntes Absenkungs-Zählwerk (6), dem ein so genannter Absenkungsspeicher (9) zugeordnet ist,
- einen Zeitgeber (8),
- Einrichtungen (20), um mindestens indirekt einerseits die für den Übergang von der oberen Position in die untere Position erforderliche Zeit, die so genannte Absenkungszeit, und andererseits die für den Übergang von der unteren Position in die obere Position erforderliche Zeit, die so genannte Anhebungszeit, zu bestimmen,
- eine Einrichtung (21), um für jede Verschiebung des Verschlusselements und entsprechend der Verschiebungsrichtung das entsprechende Zählwerk zu erhöhen,
- eine Einrichtung (22), um mindestens bei jedem Stopp durch eine mathematische Beziehung den Wert mathematisch zu berechnen, der in dem anderen Zählwerk für eine identische Position des Rolladens erscheinen müsste.

10. Vorrichtung nach Anspruch 9, **dadurch gekennzeichnet, dass** sie eine Einrichtung (23) zur Eingabe eines Trägheits-Korrekturfaktors für die Anhebungsrichtung und eines anderen Korrekturfaktors für die Absenkungsrichtung aufweist.

## Claims

1. Method of movement control for a closing device which moves between two extreme positions, called the top position and the bottom position, this closing device being rolled around a roller driven round by a motor operated by a control unit comprising in particular means of detecting an overtorque by monitoring the current/voltage phase shifting of the motor, this method being chacterised in that :
- to each of the two direct directions of movement of the shutter a counter is allocated, one called the lowering counter (6) and the other the raising counter (7);
- a clock (8) determines, at least indirectly, on the one hand, the time required to pass from the top position to the bottom position, called the lowering time, and on the other hand, the time required to pass from the bottom position to the top position, called the raising time;
- at least indirectly the lowering time is memorised in a lowering memory (9) and the raising time in a raising memory (10);
- with each movement of the closing device, and depending on the direction of movement, the relevant counter (6, 7) is incremented;
- at least at each stop the figure which should appear in the other counter for an identical position of the closing device is calculated mathematically, by an equation of three;
- at the time of the next movement, and depending on the direction of that movement, the relevant counter is incremented, and
- the movement is stopped when the counter reaches a predetermined figure at the most equal to the figure memorised.

2. Method according to Claim 1, **characterised in that**, every time the motor starts, a correction factor is applied to take the inertia into account.

3. Method according to Claim 2 **characterised in that** an inertia correction factor is applied for the raising direction and a different correction factor for the lowering direction.

4. Method according to Claim 1 **characterised in that**, in order to determine the raising and/or lowering times:
- the closing device is brought towards the said first of the stops so as to detect a first overtorque and the procedure for determining the raising and lowering times is then initialised:
- the time required to move the closing device towards the said other second stop and detect a second overtorque so as to determine one of the two raising and lowering times:
- the device for closing the shutter is moved again in the opposite direction towards the first stop until a third overtorque is detected so as to determine the other of the two raising and lowering times.

5. Method according to Claim 1 or 4 **characterised in that**:
- the raising and lowering time is a figure which corresponds to the number of pulses produced by a clock when raising or lowering occurs, and
- the memorised figure for the raising and lowering times is equal to the number of pulses measured, minimised by a predetermined amount so that in principle the shutter never completely reaches the stop and a state of compression.

6. Method according to Claim I, **characterised in that** the frequency of oscillations of the mains supply is used as the datum clock for calculating the raising and lowering times.

7. Method according to Claim 1, **characterised in that**, when an overtorque is detected while the counter has not reached one of the memorised figures, the counter is seen to allocate the maximum figure memorised.

8. Method according to Claim 1, **characterised in that**, at the time of initialisation, the counters contain a minimum figure higher than zero,

9. Device for using the method according to any one of the Claims 1 to 8 comprising a closing device such as a shutter, a motor (2) and means (5) for detecting an overtorque by monitoring the current/voltage phase shifting of the motor, **characterised in that** it comprises:
- a counter (7). called the raising counter, with which a memory (10) called the raising memory is associated;
- a counter (6), called the lowering counter, with which a memory (9) called the lowering memory is associated;
- a clock (8);
- means (20) to determine at least indirectly on the one hand the time required to pass from the top position to the bottom position, called the lowering time and, on the other hand, the time required to pass from the bottom position to the top position, called the raising time;
- a means (21) in order, with each movement of the closing device and depending on the direction of movement, to increment the relevant counter;
- a means (22) in order, at least with each stop, to calculate mathematically by a mathematical equation, the figure which should appear in the other counter for an identical shutter position

10. Device according to Claim 9, **characterised in that** it has means (23) to apply an inertia correction factor for the raising direction and a different correction factor for the lowering direction.
